# FASCICULE DE BREVET EUROPEEN

(11) **EP 2 733 074 B1**
(45) Date de publication et mention de la délivrance du brevet: **15.03.2017**
(21) Numéro de dépôt: 13005017.2
(22) Date de dépôt: 21.10.2013
(51) Int. Cl.: B64D 37/06, B64D 37/20, B64D 37/24, B64C 27/04, B64D 37/16

(54) **Dispositif de stockage de carburant, aéronef et procédé**
Vorrichtung zur Kraftstoffspeicherung, Luftfahrzeug und Verfahren
Fuel storage device, aircraft and method

(30) Priorité: 19.11.2012 FR 1203101
(43) Date de publication de la demande: 21.05.2014
(73) Titulaire: Airbus Helicopters, 13725 Marignane Cedex (FR)
(72) Inventeur: Meillat, Roland, F-13760 Saint-Cannat (FR); Mougin, Stéphane, F-13790 Rousset (FR)
(74) Mandataire: GPI & Associés

(56) Documents cités:
- EP-A2- 2 135 805
- US-A- 2 657 884
- US-A- 2 736 356
- US-A- 6 021 978

## Description

La présente invention concerne un dispositif de stockage de carburant muni d'un réservoir, un aéronef muni d'un tel réservoir ainsi qu'un procédé de commande d'un tel réservoir.

Plus particulièrement mais non exclusivement, l'invention se rapporte à un aéronef et notamment un aéronef comprenant une voilure tournante. Un aéronef à voilure tournante présente des caractéristiques spécifiques induisant des différences notables avec un avion ou une automobile.

Un dispositif de stockage de carburant comporte usuellement au moins un réservoir contenant le carburant. De plus, le dispositif de stockage inclut usuellement un volume d'expansion.

Un tel volume d'expansion a pour fonction d'accueillir une partie du carburant stocké dans les réservoirs en cas de dilatation de ce carburant. Le volume d'expansion évite alors la création de tensions importantes dans les parois des réservoirs, et/ou le débordement de carburant par un système de mise à l'air libre par exemple.

Les règlements de certification des aéronefs peuvent imposer un volume minimal à ce volume d'expansion. Par exemple, le paragraphe 969 du règlement de certification connu sous la dénomination « CS 29 » précise que le volume d'expansion doit être supérieur ou égal à deux pour cent du volume total des réservoirs.

De plus, ce paragraphe spécifie que le volume d'expansion ne doit pas pouvoir être rempli par inadvertance lorsque l'aéronef se trouve dans une position normale au sol.

Il est à noter que l'on entend par « position normale » ou « condition normale » les positions autorisées du véhicule par le constructeur lors d'un remplissage. Ces positions autorisées peuvent être définies par exemple au travers d'un angle de roulis et d'un angle de tangage seuils du véhicule.

Il peut donc être strictement interdit de remplir au moins partiellement le volume d'expansion lors du remplissage des réservoirs, afin que ce volume d'expansion soit entièrement disponible en cas de dilatation du carburant en vol.

Par ailleurs, un dispositif de stockage en carburant inclut généralement un circuit de mise à l'air libre permettant d'évacuer dans l'atmosphère une partie des gaz contenus dans le dispositif de stockage.

Pour ménager un volume d'expansion, il est possible selon une première solution d'utiliser la partie supérieure d'un réservoir en tant que volume d'expansion, ce volume d'expansion communiquant avec l'atmosphère par un circuit de mise à l'air libre.

Toutefois, on comprend que l'orifice de remplissage doit être positionné avec soin afin que la partie supérieure du réservoir ne soit pas remplie lors du remplissage du réservoir. Cette partie supérieure doit alors se trouver à l'aplomb d'un plan de remplissage passant par l'orifice de remplissage.

Cette première solution présente l'avantage d'être simple. Par contre, la contrainte liée au positionnement de l'orifice de remplissage peut rendre son intégration compliquée sur certains aéronefs, notamment des aéronefs présentant des réservoirs agencés au sein d'une « barque » disposée sous un plancher cabine.

Selon une deuxième solution, on met en oeuvre un vase d'expansion définissant le volume d'expansion requis.

Ce vase d'expansion est distinct du réservoir avec lequel il est en communication. Dès lors, le vase d'expansion peut être déporté par rapport à ce réservoir, par exemple dans une partie haute d'un circuit de mise à l'air libre.

On comprend qu'il est alors plus aisé de positionner l'espace d'expansion dans un plan situé à l'aplomb d'un orifice de remplissage. Toutefois, il peut être délicat de libérer au sein de l'aéronef un espace susceptible d'accueillir le vase d'expansion.

De plus, cette deuxième solution induit parfois l'agencement de moyens de sécurité annexes pour prévenir un risque d'incendie en cas de crash, maximisé éventuellement par la présence de carburant dilaté dans un vase d'expansion déporté.

Enfin, on comprend que cette deuxième solution conduit à une architecture relativement compliquée, voire de surcroît à des difficultés de maintenance.

Dans le domaine automobile, on connaît des réservoirs de carburant obturés hermétiquement par un bouchon de remplissage fermant hermétiquement et munis d'un dispositif annexe de mise à la pression atmosphérique du contenu du réservoir.

Ce dispositif annexe est obtenu au moyen d'une canalisation partant de la partie supérieure du réservoir et se dirigeant vers un récipient contenant du charbon actif.

Ce récipient contient du charbon actif pour dépolluer les gaz s'échappant du réservoir de carburant avant leur rejet dans l'atmosphère

De plus, le système comprend un vase d'expansion agencé entre le réservoir de carburant et ledit récipient.

Afin d'éviter que du carburant ne pénètre dans le vase d'expansion pendant le remplissage, l'automobile est munie généralement de dispositifs obturant le circuit de mise à l'air libre lorsque le bouchon de remplissage et/ou la trappe de remplissage prévue dans la carrosserie du véhicule sont ouverts.

Les aéronefs à voilure tournante et notamment les hélicoptères ne sont classiquement pas équipés d'un récipient de filtrage des gaz. Le réservoir de carburant est directement relié à l'air libre par des tuyauteries, voire par au moins un clapet anti-renversement de mise à l'air libre ayant pour fonction d'éviter de vider le réservoir de carburant au travers du circuit de mise à l'air libre en cas de retournement de l'aéronef.

Le carburant n'a donc pas besoin d'être soumis à une pression particulière sur un tel véhicule. Pour cette raison, l'homme du métier applique parfois la première solution précitée afin d'obtenir un volume d'expansion interne au réservoir.

Sur un véhicule de type avion, les réservoirs de carburant sont généralement agencés dans les ailes. La problématique architecturale liée à un avion est donc complètement différente de la problématique associée à un aéronef à voilure tournante de type hélicoptère par exemple.

Sur un avion de tourisme, le ravitaillement en carburant se fait généralement par une trappe agencée sur la paroi supérieure du réservoir de carburant. L'aile présentant usuellement une inclinaison, une partie des réservoirs demeure vide après le ravitaillement et représente ainsi le volume d'expansion requis.

Sur certains avions, plusieurs réservoirs sont montés à l'intérieur des ailes. Ces réservoirs communiquent avec une chambre de ventilation à l'aide d'une ligne de ventilation.

En cas de dilatation du carburant en vol, ce carburant peut se déverser dans la chambre de ventilation. Des pompes de transfert assurent alors le retour du carburant de la chambre de ventilation vers les réservoirs.

Le document US 7621483 présente une architecture de ce type.

Les réservoirs sont sous pression. De plus, le dispositif de stockage de carburant présente une complexité et un dimensionnement ne paraissant pas compatibles avec les exigences des aéronefs à voilure tournante de type hélicoptère notamment.

Parmi l'arrière plan technologique, on connaît le document DE19925728 qui présente un vase d'expansion agencé en série sur un circuit de mise à l'air libre. Le vase d'expansion est en outre disposé à l'intérieur d'un réservoir.

Dès lors, le volume d'expansion délimité par le vase d'expansion communique d'une part avec l'intérieur du réservoir par le biais d'un ensemble comprenant au moins une première valve, et, d'autre part, avec l'extérieur par une deuxième valve et un système de traitement au charbon actif.

En fonction de la différence de pression entre le volume d'expansion et l'intérieur du réservoir, le carburant peut se déplacer du réservoir vers le vase d'expansion et inversement

Par ailleurs, le document EP0233681 présente un dispositif de stockage de carburant comprenant un réservoir et un vase d'expansion agencé dans ce réservoir.

Le document US 2005/199294 présente un réservoir relié à une tubulure de remplissage débouchant sur un orifice de remplissage. De plus, une ligne de mise à l'air libre relie le réservoir à l'air libre.

Dès lors, un vase d'expansion est agencé en dehors du réservoir, ce vase d'expansion étant relié par une durite haute et une durite basse à ladite ligne de mise à l'air libre.

L'orifice de remplissage est en outre présent dans un plan à l'aplomb desdites durites.

Le document US 2002/121300 présente un réservoir relié à une tubulure de remplissage débouchant sur un orifice de remplissage. De plus, un vase d'expansion est agencé dans le réservoir. Une canalisation s'étend alors dudit vase d'expansion vers un système de traitement de vapeur.

Le document DE 37 19 834 présente un réservoir. De plus, un vase d'expansion est agencé dans le réservoir. Une canalisation s'étend alors dudit vase d'expansion vers l'extérieur.

On connaît aussi le document DE 41 21 321. Le vase d'expansion comporte une paroi réalisée à partir d'une mousse comportant des cellules ouvertes, le vase d'expansion se remplissant de carburant moins vite que le réservoir.

Bien qu'intéressant, ce dispositif de stockage ne paraît pas compatible avec les règlements de certification spécifiant que le volume d'expansion ne doit pas pouvoir être rempli par inadvertance lorsque l'aéronef se trouve dans une position normale au sol.

Par ailleurs, en fonction de la géométrie du réservoir et de la position de la zone d'alimentation, un volume de carburant peut ne pas atteindre la conduite d'alimentation. Ce volume de carburant est parfois dénommé « volume non consommable » dans la mesure où ce volume de carburant ne peut pas être consommé par un moteur.

Afin de minimiser le volume non consommable dans les réservoirs, les constructeurs introduisent des surfaces en pente dans le fond des réservoirs pour diriger le carburant vers la conduite d'alimentation. De telles surfaces sont dénommées « pente » par simplification. Les pentes peuvent être dirigées selon les sens longitudinal et transversal du véhicule.

Dès lors, les réservoirs peuvent être réalisés dans une matière souple. Une telle matière comprend par exemple un support en polyester et un mélange d'élastomères. Des mousses insérées dans le compartiment d'un réservoir permettent ainsi de réaliser des pentes sur lesquelles repose un réservoir souple.

Cependant, la mise en place des mousses et le choix des géométries en coins inférieurs de réservoirs engendrent une perte de volume de carburant embarquable non négligeable. De plus, les performances différentes entre chaque aéronef impliquent que la géométrie de chaque réservoir doit être étudiée en fonction de l'aéronef, empêchant tout type de standardisation.

De surcroît, les mousses ajoutées ont une masse non négligeable.

Le document US5927651 dévoile un dispositif de réservoir à carburant équipé d'une structure en élastomère déformable permettant de s'adapter aux formes d'un compartiment.

Le document FR2294913 dévoile un moyen expansible de stockage de carburant pouvant être dilaté et venir dans une position dans laquelle il se trouve au moins partiellement à l'extérieur d'une zone d'un avion dite « zone de surface ».

Le document US3409253 dévoile un système de réservoir rétractable pour aéronef formé de moyens rigides encadrant une surface flexible pour s'adapter à la quantité de carburant embarquée.

On comprend donc qu'un dispositif de stockage de carburant représente un système complexe, délicat à optimiser. En effet, le volume consommable stocké peut être minimisé par un volume d'expansion et l'introduction de pentes.

Les documents EP 2135805, US 2736356, US 2657884 et US 6021978 sont éloignés du domaine de l'invention.

En effet, le document EP2135805 présente un réservoir ouvert sur l'extérieur. Une outre est agencée dans ce réservoir, le volume de l'outre dépendant de la pression régnant à l'extérieur de ce réservoir.

Le document US 2657884 décrit un réservoir muni d'organes gonflables disposés entre des raidisseurs. Ces organes gonflables visent à évacuer un fluide coincé entre les raidisseurs.

Le document US 2736356 décrit un réservoir de carburant séparé d'un moyen de pressurisation par une membrane mobile.

Le document US 6021978 divulgue les caractéristiques du preambule de la revendication 1 et décrit un système visant à protéger un réservoir contre des risques d'explosion

La présente invention a alors pour objet un dispositif de stockage innovant pouvant notamment répondre aux exigences relatives à un volume d'expansion.

Selon l'invention, un dispositif de stockage de carburant est pourvu d'au moins un réservoir, ce réservoir ayant une enveloppe s'étendant en élévation d'un fond vers une paroi supérieure.

Ce dispositif de stockage est pourvu d'au moins un sac gonflable agencé dans ladite enveloppe, ledit dispositif de stockage comportant un moyen de gonflage/dégonflage gonflant chaque sac gonflable au moins partiellement afin d'atteindre un volume gonflé préalablement à un remplissage du réservoir et dégonflant ledit sac gonflable suite au remplissage afin de garantir la présence d'un volume d'expansion dans ledit réservoir.

Le volume gonflé est alors au moins égal au volume d'expansion à garantir pour le dispositif de stockage.

Ce dispositif de stockage inclut donc un dispositif d'expansion pour ménager un volume d'expansion, ce dispositif d'expansion étant muni d'au moins un sac gonflable et d'un moyen de gonflage/dégonflage.

Dès lors, le sac gonflable est gonflé préalablement au remplissage. L'espace rempli par le sac gonflable dans l'enveloppe n'est de fait pas occupé par un liquide lors du remplissage.

A l'issue du remplissage, chaque sac gonflable est dégonflé au moyen d'une commande autopilotée ou envoyée par un équipage. Le dispositif de stockage est alors muni d'un volume d'expansion au moins égal au volume gonflé des sacs préalablement au remplissage. Le sac gonflable peut être dégonflé au sol et donc avant le vol, et éventuellement immédiatement après le remplissage.

Ainsi, le volume d'expansion ne peut être rempli par erreur lors du ravitaillement. Chaque sac ne communique pas avec le réservoir, et libère une fois dégonflé un volume d'expansion.

Le volume d'expansion est de fait présent dans le réservoir. L'invention présente donc un dispositif dépourvu de vase d'expansion. Ce dispositif peut en outre être efficace quel que soit l'emplacement de l'orifice de remplissage de carburant.

En l'absence d'un vase d'expansion agencé au sein de l'aéronef, la sécurité de cet aéronef est donc renforcée. De plus, la position du centre de gravité de l'aéronef n'est pas modifiée par la mise en hauteur d'une masse de carburant non négligeable lors de l'expansion du carburant.

L'intégration du système de carburant sur un aéronef est en outre simplifiée. Aucune pompe de transfert n'est par exemple nécessaire pour faire circuler le carburant entre un réservoir et un vase d'expansion afin de vider le vase d'expansion

L'invention propose donc un système simple pour garantir la présence d'un volume d'expansion au sein des réservoirs répondant aux exigences des règlements de certification.

Par ailleurs, l'équipage de l'aéronef peut éventuellement décider de ne pas utiliser le volume d'expansion pour remplir le réservoir carburant à son volume maximum (dans le cas d'application ne requérant pas un volume d'expansion).

Ce dispositif de stockage peut de plus comporter une ou plusieurs des caractéristiques suivantes.

Chaque sac est par exemple muni d'une enveloppe résistante et étanche.

Selon un premier mode de réalisation, au moins un sac est fixé à la paroi supérieure du réservoir. Le sac gonflable est alors gonflé et dégonflé uniquement pour ménager un volume d'expansion.

Selon un deuxième mode de réalisation, chaque sac peut éventuellement remplir non pas une, mais deux fonctions fondamentales. En effet, chaque sac permet de ménager un volume d'expansion et de diriger le carburant vers une zone d'alimentation. Le volume utile du réservoir est donc très bien exploité.

Selon le deuxième mode de réalisation, au moins un sac est fixé audit fond pour d'une part ménager un volume d'expansion et, d'autre part, pour ménager au moins une pente d'inclinaison variable afin de diriger le carburant vers une zone prédéterminée du réservoir par gravité.

Grâce à l'utilisation d'un dispositif d'expansion, cette combinaison permet de créer un volume d'expansion complètement sécurisé et d'augmenter la contenance des réservoirs de carburant. De plus, cette combinaison peut être intégrée dans un système déjà existant.

De surcroit, cette combinaison permet de gérer facilement la répartition des masses dans l'appareil. Par le jeu des gonflages dans les réservoirs reliés entre eux, l'équipage peut décider d'annuler par exemple les volumes d'expansion dans les réservoirs centraux (proches du centre de gravité de l'appareil) pour les cumuler dans un réservoir le plus excentré.

La zone prédéterminée peut alors être la zone d'alimentation du réservoir à savoir la zone du réservoir accueillant une section d'entrée d'une conduite de transfert de carburant vers un moteur. Lorsque la conduite de transfert est munie d'une pompe de transfert, les pentes peuvent diriger du carburant vers cette pompe de transfert.

Chaque sac gonflable peut reposer sur le fond du réservoir en lui étant fixé de manière réversible ou irréversible. La pente variable ménagée par un sac est alors une surface du sac dirigée vers la zone d'alimentation du fond du réservoir.

Dès lors, l'invention présente un réservoir muni d'un fond à pente variable sur commande d'un moyen de gonflage/dégonflage.

Chaque pente peut varier entre une position minimale, correspondant à une pente nulle ou quasi-nulle, vers une position maximale correspondant à une pente maximale définie par le constructeur.

En gonflant un sac gonflable, le moyen de gonflage/dégonflage augmente l'inclinaison d'une pente formée au niveau du fond du réservoir. A l'inverse, en dégonflant un sac gonflable, le moyen de gonflage/dégonflage réduit l'inclinaison d'une pente formée au fond du réservoir.

Ainsi, l'invention ne prévoit pas un réservoir présentant une pente fixe réalisée à l'aide de mousses, ou encore un réservoir extensible épousant la forme de son contenant et/ou s'adaptant au volume de carburant embarqué.

En effet, l'invention va à l'encontre de préjugés en gérant l'inclinaison des pentes du fond des réservoirs. Par conséquent, au moins un réservoir présente au moins une pente variable réalisée à l'aide d'un sac gonflable et d'un moyen de gonflage/ dégonflage.

Un tel réservoir comporte ainsi un fond présentant au moins une pente mobile en fonction de la quantité de carburant présente dans le réservoir.

Par exemple, avant le remplissage du réservoir, les sacs gonflables sont au moins partiellement gonflés.

Le réservoir peut alors accueillir un volume de carburant maximisé garantissant toutefois la présence d'un volume d'expansion à l'issue du remplissage.

A l'issue du remplissage, les sacs sont en effet dégonflés pour ménager le volume d'expansion requis.

A cet effet, le dispositif peut contenir un moyen de signalement pour signaler la fin d'un remplissage. Un tel moyen de signalement est par exemple pourvu d'un capteur de niveau, d'un moyen d'alerte, et / ou encore d'un moyen manuel de signalement.

Le gonflage partiel des sacs avant le remplissage ne vise pas à ménager des pentes dirigeant précisément le carburant vers une zone d'alimentation, mais permet de réserver un volume d'expansion dans le réservoir.

Par contre, lorsque le réservoir se vide, le moyen de gonflage/dégonflage peut gonfler les sacs gonflables, partiellement ou totalement. Cette opération peut être réalisée dans la mesure où le volume de carburant contenu a diminué. Ainsi, la présence d'un sac gonflé n'influe pas sur le volume d'expansion minimal présent dans le réservoir.

Le réservoir présente alors des pentes au niveau de son fond pour de plus minimiser le volume de carburant non consommable.

Ce dispositif de stockage permet donc d'optimiser le volume de carburant consommable tout en garantissant un volume d'expansion sans sortir du concept inventif général.

La pente ménagée par un sac gonflable peut par exemple atteindre trois inclinaisons prédéterminées à savoir :
- une inclinaison intermédiaire à atteindre avant le remplissage du réservoir,
- une inclinaison minimale à atteindre à l'issue du remplissage du réservoir,
- une inclinaison maximale à atteindre en dessous d'un seuil de carburant pour diriger le carburant vers une zone d'alimentation.

Chaque sac est d'ailleurs éventuellement compartimenté afin de présenter un premier compartiment à gonfler/dégonfler pour obtenir un volume d'expansion, et un deuxième compartiment pour ménager une pente. Chaque étape est alors réalisée avec précision.

Par ailleurs, le dispositif de stockage peut comporter un moyen de mesure du volume de carburant relié au moyen de gonflage pour régler automatiquement ladite inclinaison en fonction dudit volume.

Dès lors, le moyen de gonflage/dégonflage gonfle au moins un sac en fonction de la quantité de carburant présente dans le réservoir.

Ce moyen de mesure peut être un système de jaugeage, ou un capteur placé à une hauteur définie par le constructeur pour détecter la présence de carburant à cette hauteur.

Par conséquent, le moyen de gonflage/dégonflage gonfle éventuellement au moins un sac gonflable en dessous d'un seuil de carburant pour ménager les pentes adéquates.

Selon une variante alternative ou complémentaire, le dispositif de stockage comprend un système de mesure d'une durée de vol.

Le constructeur peut fixer une durée de vol à partir de laquelle les sacs gonflables doivent être entièrement déployés.

En effet, on comprend qu'à l'issue de ladite durée de vol, la quantité de carburant restant dans le réservoir ne doit pas entraver le déploiement des sacs gonflables.

Selon une variante alternative ou complémentaire, le dispositif de stockage comprend un moyen de commande manuel pour commander le moyen de gonflage/dégonflage.

L'équipage peut alors choisir le moment requis pour gonfler les sacs gonflables.

De plus, l'équipage peut éventuellement régler le degré d'inclinaison des pentes en réglant la pression du fluide de gonflage contenu dans chaque sac gonflable. Ainsi, l'équipage peut régler ladite inclinaison afin de l'adapter au mieux au type de mission à réaliser.

D'ailleurs, le dispositif de stockage peut comporter un capteur de pression. Ce capteur de pression permet en effet de fournir une information relative à la pente ménagée par un sac gonflable.

Le dispositif de stockage est par exemple muni d'un moyen d'affichage pour afficher une information relative à ladite pente. Ce moyen d'affichage peut donc coopérer avec un capteur de pression pour déterminer si un sac gonflable est gonflé ou dégonflé.

Le dispositif de stockage est aussi par exemple muni d'un moyen d'alerte pour alerter un individu du gonflement effectif des sacs.

Par ailleurs, le dispositif étant pourvu d'un système de jaugeage mesurant la hauteur de carburant dans le réservoir, le système de jaugeage comporte une loi de jaugeage pour chaque inclinaison autorisée de la pente, chaque loi de jaugeage fournissant le volume de carburant en fonction de ladite hauteur.

On entend par « loi de jaugeage pour chaque inclinaison » soit l'utilisation d'une pluralité de lois, soit l'utilisation d'une unique loi présentant au moins un paramètre variable en fonction de l'état des sacs gonflables.

En effet, lorsque les sacs gonflables sont gonflés, on comprend que la géométrie du volume intérieur du réservoir est modifiée.

Par conséquent, la loi de jaugeage est modifiée lorsque les sacs gonflables sont gonflés.

Un tel système de jaugeage peut comprendre une canne de jaugeage et une unité de traitement. L'unité de traitement communique alors avec un moyen dédié permettant de déterminer l'état des sacs gonflables, tel qu'un capteur de pression par exemple.

Indépendamment de la réalisation, le dispositif de stockage peut aussi comporter un moyen de fixation réversible de chaque sac gonflable à un réservoir.

Outre un dispositif de stockage, l'invention vise aussi un aéronef muni d'un tel dispositif de stockage.

De plus, l'invention vise un procédé de stockage de carburant mettant en oeuvre le dispositif de stockage.

Au cours de ce procédé, on gonfle au moins partiellement au moins un sac gonflable afin de ménager un volume d'expansion dans le réservoir avant un remplissage du réservoir, puis on dégonfle chaque sac gonflable à l'issue du remplissage.

Ce procédé peut comporter une ou plusieurs des caractéristiques qui suivent.

Ainsi, on peut gonfler chaque sac gonflable lorsque le volume de carburant est inférieur à un seuil prédéterminé suite au remplissage pour ménager une pente au fond d'un réservoir permettant de diriger par gravité le carburant contenu vers une zone prédéterminée du réservoir en fonction du niveau de carburant.

Par exemple et pour ménager une pente permettant de diriger par gravité le carburant contenu vers une zone prédéterminée :
- le volume de carburant étant supérieur audit seuil suite à un remplissage, on gonfle ledit sac gonflable lorsque le volume de carburant devient inférieur au seuil prédéterminé,
- le volume de carburant n'atteignant pas ledit seuil suite à un remplissage, on gonfle ledit sac gonflable à l'issue dudit remplissage

Par suite, à l'issue d'un remplissage de carburant, on gonfle les sacs gonflables seulement en dessous d'un seuil de carburant.

Par conséquent, si le remplissage du réservoir ne permet pas d'atteindre ledit seuil, on peut gonfler les sacs gonflables après ce remplissage. Dans cette configuration, le dégonflage des sacs à l'issue du remplissage peut être inhibé.

Par contre, si le réservoir est suffisamment rempli pour que la quantité de carburant stockée dépasse ledit seuil, alors on gonfle les sacs gonflables lorsque ladite quantité devient inférieure audit seuil.

Une procédure automatique peut donc être mise en oeuvre pour gérer les pentes présentes au fond du réservoir.

Un équipage peut aussi requérir le gonflage des sacs manuellement de manière alternative ou complémentaire.

De plus, au moins une loi de jaugeage étant déterminée pour fournir un volume de carburant en fonction d'une hauteur de carburant dans le réservoir, on peut modifier ladite loi de jaugeage lorsque ladite pente est modifiée.

Cette modification peut être obtenue par l'utilisation de plusieurs lois de jaugeage, ou en modifiant au moins un paramètre d'une loi de jaugeage.

Eventuellement, lorsque le dispositif de stockage est mis en oeuvre sur un aéronef pourvu d'au moins un moteur, on peut dégonfler chaque sac gonflable à l'arrêt dudit moteur.

Un moyen d'inhibition manuel peut être optionnellement prévu pour éviter un tel dégonflage sur ordre d'un équipage.

Selon un procédé préféré, on réalise les étapes suivantes :
a) on gonfle partiellement les sacs au moyen d'une commande autopilotée ou envoyée par l'équipage pour assurer le maintien d'un volume d'expansion lors du remplissage carburant,
b) on affiche une information de gonflage partielle des sacs à l'équipage,
c) on remplit le réservoir en carburant à un niveau déterminé par l'équipage,
d) on dégonfle complètement les sacs,
e) si le niveau de carburant n'atteint pas un seuil prédéterminé à l'issue du remplissage, on gonfle complètement les sacs,
f) si le niveau de carburant a atteint le seuil prédéterminé à l'issue du remplissage, lorsque ce niveau de carburant devient inférieur au seuil prédéterminé, une alarme est déclenchée pour déclencher le gonflage complet des sacs (passivement ou activement),
g) on modifie la loi de jaugeage des réservoirs en fonction de la nouvelle configuration,
h) on dégonfle les sacs automatiquement suite à l'arrêt des moteurs sauf commande contraire de l'équipage.

Eventuellement, on peut inhiber l'étape d) si l'étape e) doit être mise en oeuvre.

En effet, en dessous de ce seuil, le réservoir présente de fait le volume d'expansion requis.

Par ailleurs, on peut dégonfler chaque sac gonflable à l'issue du remplissage au sol, et notamment avant un déplacement de l'aéronef pour garantir la présence du volume d'expansion au sol.

Eventuellement, on peut dégonfler chaque sac gonflable immédiatement à l'issue du remplissage.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef muni d'un dispositif de stockage selon un premier mode de réalisation,
- les figures 2 à 5, des vues explicitant le procédé mis en oeuvre selon le premier mode de réalisation.
- la figure 6, une vue d'un aéronef muni d'un dispositif de stockage selon un deuxième mode de réalisation,
- la figure 7, une vue partielle d'un dispositif de stockage selon le deuxième mode de réalisation,
- les figures 8 à 17, des vues explicitant le procédé selon l'invention selon le deuxième mode de réalisation,

Les éléments présents dans plusieurs figures distinctes sont affectés d'une seule et même référence.

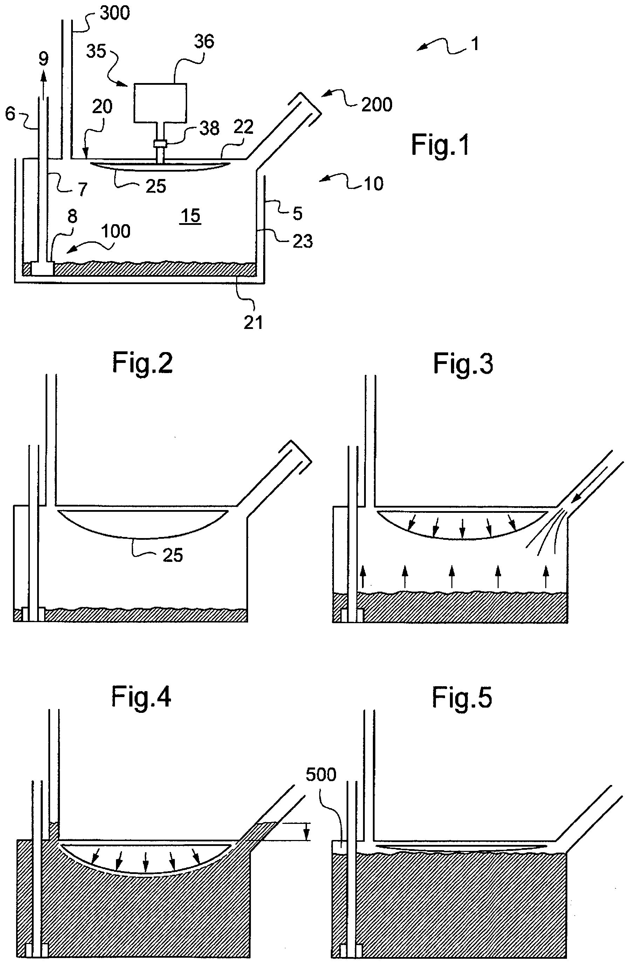

La figure 1 présente un véhicule 1 selon un premier mode de réalisation de l'invention. Ce véhicule est par exemple un aéronef, tel qu'un aéronef muni d'une voilure tournante.

Cet aéronef 1 possède un dispositif de stockage 10. Ce dispositif de stockage 10 peut notamment être un système pour stocker le carburant alimentant une installation motrice 9.

Les autres organes de l'aéronef ne sont pas représentés pour ne pas alourdir la figure 1.

Indépendamment du mode de réalisation, le dispositif de stockage est pourvu d'au moins un réservoir 15 agencé dans un compartiment 5 du véhicule 1. Le réservoir 15 est alors muni d'une enveloppe 20 délimitant un espace de stockage.

Cette enveloppe 20 s'étend ainsi en élévation d'un fond 21 vers une paroi supérieure 22 qui sont séparés par des parois latérales 23.

Par ailleurs, le dispositif de stockage 10 inclut une conduite 6 de transfert de carburant débouchant sur une zone prédéterminée 100 de transfert de carburant du réservoir 15. Cette conduite 6 peut comporter soit au moins une tuyauterie de transfert de carburant 7, soit selon l'exemple représenté au moins une tuyauterie de transfert de carburant 7 et une pompe de gavage 8.

Le dispositif de stockage peut aussi comporter un système de mise à l'air libre 300 et un système de remplissage 200, tel qu'un système de remplissage par gravité.

Ce dispositif de stockage comporte alors un système pour ménager un volume d'expansion dans le réservoir 15. Ce dispositif de stockage 10 est muni d'au moins un sac gonflable 25 agencé dans l'enveloppe 20.

De plus, un moyen de gonflage/dégonflage 35 est relié à chaque sac 25 pour gonfler chaque sac gonflable 25 selon un procédé prédéterminé. Ce moyen de gonflage/dégonflage 35 peut inclure un générateur de pression 36 communiquant avec au moins un sac gonflable 25 par une tuyauterie souple et une valve 38. Le moyen de gonflage/dégonflage 35 est activable manuellement, ou automatiquement via une unité de contrôle appliquant une procédure définie par le constructeur.

Tout système de gonflage/dégonflage réversible d'un sac peut être utilisé.

En outre, le dispositif est éventuellement équipé d'un moyen d'alerte signalant l'état de chaque sac à un équipage.

Le moyen de gonflage/dégonflage 35 gonfle au moins partiellement chaque sac afin d'atteindre un volume gonflé préalablement à un remplissage du réservoir, et dégonfle ledit sac gonflable suite au remplissage afin de garantir la présence d'un volume d'expansion dans ledit réservoir.

Selon un premier mode de réalisation, chaque sac gonflable est fixé dans le réservoir à la paroi supérieure 22 de l'enveloppe, éventuellement par des moyens réversibles.

En référence à la figure 2, on gonfle au moins partiellement au moins un sac gonflable avant un remplissage du réservoir.

Selon le premier mode de réalisation, chaque sac gonflable est complètement gonflé par le moyen de gonflage/dégonflage 35.

Dès lors et en référence à la figure 3, le réservoir de carburant est rempli.

Le niveau de carburant dans le réservoir augmente et peut « noyer » le sac gonflable selon la représentation de la figure 4.

Par suite, à l'issue du remplissage, chaque sac gonflable est dégonflé par le moyen de gonflage/dégonflage 35.

En référence à la figure 5, il en résulte une baisse du niveau de carburant permettant la création d'un volume d'expansion 500 au sein du réservoir.

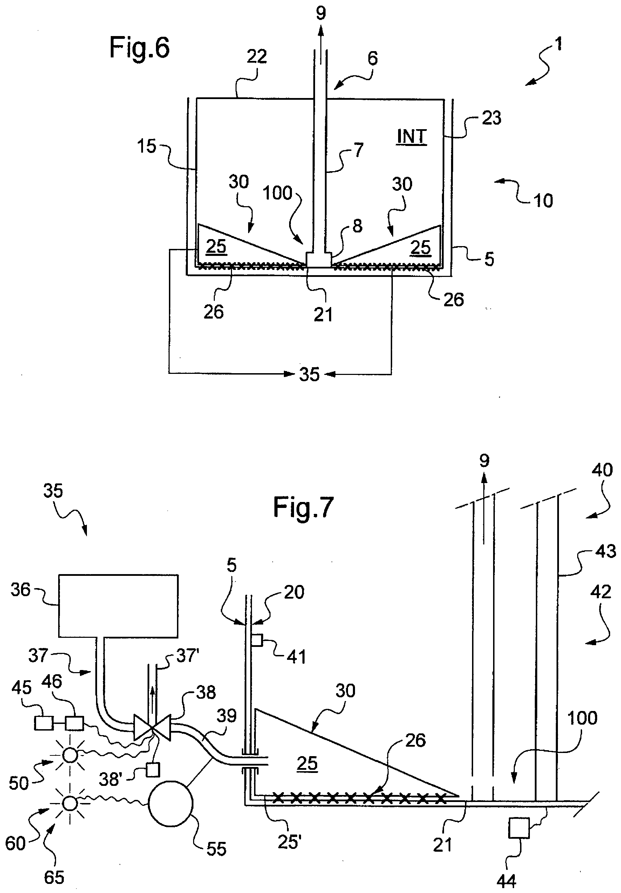

Selon le deuxième mode de réalisation de la figure 6, le dispositif de stockage comporte un système pour ménager un volume d'expansion et des pentes variables au fond 21 d'au moins un réservoir, et notamment au fond d'un réservoir incluant une zone prédéterminée 100 de transfert de carburant.

Ce dispositif de stockage 10 comporte alors au moins un sac gonflable 25 pouvant être gonflé sur requête afin notamment de ménager une pente 30 au fond d'un réservoir. Cette pente 30 permet ainsi à un carburant contenu dans le réservoir d'être dirigé par gravité vers la zone prédéterminée 100.

Par suite, le dispositif de stockage 10 est muni d'un moyen de gonflage/dégonflage 35 pour gonfler/dégonfler des sacs gonflables 25 d'au moins un réservoir. En gonflant ou en dégonflant un sac gonflable, le moyen de gonflage/dégonflage 35 permet de régler l'inclinaison de la pente 30 générée par ce sac gonflable entre une position minimale et une position maximale et de générer un volume d'expansion.

En référence à la figure 7, chaque sac gonflable peut être disposé à l'intérieur de l'enveloppe 20 d'un réservoir.

Chaque sac gonflable est éventuellement fixé à cette enveloppe par un moyen de fixation réversible 26. Un tel moyen de fixation réversible comprend par exemple une bande auto-agrippante mettant en oeuvre une couche pourvue de crochets et une couche pourvue de boucles.

Par exemple, seule la face 25' d'un sac gonflable opposée à la pente 30 générée est fixée à l'enveloppe du réservoir. Le sac gonflable peut alors être fixé sur le fond 21 de l'enveloppe.

Selon une autre variante, chaque sac gonflable est fixé de manière irréversible à l'enveloppe.

En outre, le moyen de gonflage/dégonflage 35 peut comporter au moins un générateur de pression 36.

Un générateur de pression 36 communique alors avec au moins un sac gonflable 25 par au moins une tuyauterie souple et une valve 38.

Plus précisément, une première tuyauterie 37 relie une valve 38 au générateur de pression, et une deuxième tuyauterie 39 relie la valve à un sac gonflable.

La valve peut comporter trois positions de manière à être reliée à une tuyauterie d'évacuation de fluide 37' pour dégonfler un sac gonflable. La tuyauterie d'évacuation de fluide 37' peut être dirigée vers un générateur de pression.

Un seul générateur de pression peut être utilisé pour gonfler/dégonfler plusieurs sacs gonflables, voire l'ensemble des sacs gonflables par exemple.

Tout dispositif d'acheminement de fluide d'un générateur de pression vers un sac gonflable peut de plus être envisagé.

Eventuellement, chaque sac gonflable peut comprendre deux compartiments indépendants. Le moyen de gonflage/dégonflage est alors relié à chaque compartiment. Ce moyen de gonflage/dégonflage coopère par exemple avec un premier compartiment pour générer un volume d'expansion dans le réservoir, et avec le deuxième compartiment pour ménager une pente dans le réservoir.

Le moyen de gonflage/dégonflage 35 gonfle ou dégonfle les sacs gonflables en fonction de la phase de vol et de la quantité de carburant présente dans le réservoir.

En effet, on réduit l'espace interne de stockage INT en gonflant les sacs gonflables. Dès lors, l'invention propose de gonfler les sacs gonflables dans des situations prédéfinies pour à la fois permettre la création d'un volume d'expansion et pour ménager des pentes permettant de diriger le carburant vers une zone prédéterminée.

Selon la variante, le dispositif de stockage est alors muni d'un moyen de mesure du volume de carburant 40 contenu dans le réservoir, et/ou d'un système de mesure 45 d'une durée de vol, et/ ou d'un moyen de commande manuel 50 dudit moyen de gonflage/dégonflage 35.

Selon une première variante, un moyen de mesure 40 du volume de carburant est relié au moyen de gonflage/dégonflage 35 pour régler automatiquement l'inclinaison des pentes du réservoir en fonction du volume de carburant présent dans le réservoir.

Ce moyen de mesure 40 peut inclure un capteur 41 changeant d'état lorsque la hauteur de carburant dans le réservoir passe un seuil. Ce capteur 41 peut être relié à chaque valve 38 d'un moyen de gonflage/dégonflage 35, ou encore à un moyen de traitement analysant l'état du capteur pour commander le cas échéant chaque valve 38.

Le moyen de mesure 40 inclut éventuellement un système de jaugeage 42.

Ce système de jaugeage 42 comprend éventuellement une canne de jaugeage 43 coopérant avec une unité de traitement 44. La canne de jaugeage 43 mesure par exemple la hauteur de carburant dans le réservoir.

L'unité de traitement 44 déduit le volume de carburant contenu à partir d'au moins une loi de jaugeage convertissant la hauteur de carburant en volume de carburant.

Cette unité de traitement communique avec chaque valve 38 d'un moyen de gonflage/dégonflage 35, ou encore avec un moyen de traitement analysant les informations provenant de l'unité de traitement pour commander le cas échant chaque valve 38.

Selon une deuxième variante, le dispositif de stockage est muni d'un système de mesure 45 d'une durée de vol.

Par calculs, le constructeur peut déterminer une durée de vol permettant de garantir que l'espace interne réduit suite au gonflement des sacs gonflables en vol est suffisant pour contenir le carburant stocké.

Le système de mesure 45 coopère alors avec le moyen de gonflage/dégonflage 35, via éventuellement un système de traitement 46.

Selon une troisième variante, le dispositif de stockage inclut un moyen de commande manuel 50 du moyen de gonflage/dégonflage 35, par exemple relié à chaque valve 38.

Cette valve peut être munie d'un indicateur de position 38'.

Ces variantes sont éventuellement combinables.

Par ailleurs, le dispositif de stockage peut comporter au moins un capteur de pression 55 permettant d'estimer la pression du fluide contenu dans un sac gonflable.

Le capteur de pression peut coopérer avec une tuyauterie 39 du moyen de gonflage/dégonflage 35.

Ce capteur permet de délivrer une information représentative de l'état d'au moins un sac gonflable, et dès lors représentative de l'inclinaison de la pente générée par ce sac gonflable.

Par exemple, une faible pression indique qu'un sac gonflable est dégonflé alors qu'une pression importante indique qu'un sac gonflable est gonflé.

Ce capteur de pression peut être associé à un moyen d'affichage 60 affichant une information relative à ladite pente et /ou à un moyen d'alerte 65 alertant un individu que ledit sac est gonflé, via une alarme visuelle ou sonore.

Le moyen d'affichage et le moyen d'alerte peuvent être agencés dans un même équipement.

En outre, lorsque le dispositif de stockage 10 est pourvu d'un système de jaugeage 42 mesurant la hauteur de carburant dans le réservoir 15, le système de jaugeage 42 peut comporter une loi de jaugeage pour chaque inclinaison autorisée des pentes du réservoir.

Ainsi, le dispositif de stockage peut par exemple appliquer une loi de jaugeage lorsque les sacs gonflables sont dégonflés, et une loi de jaugeage lorsque les sacs gonflables sont gonflés.

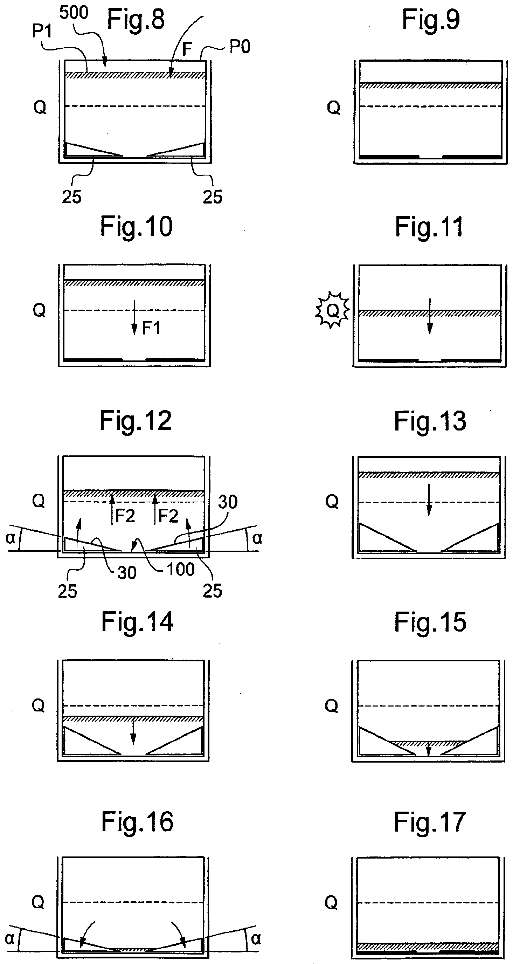

Les figures 8 à 17 explicitent le procédé mis en oeuvre par ce dispositif de stockage.

En référence à la figure 8, au sol et préalablement à un remplissage, les sacs gonflables sont au moins partiellement gonflés. Une information peut être transmise à l'équipage pour signaler le gonflage au moins partiel des sacs.

Dès lors, le réservoir peut être rempli de carburant, le remplissage étant schématisé par la flèche F.

A l'issue du remplissage, le niveau de carburant dans le réservoir peut atteindre un niveau P0. Dès lors, on dégonfle les sacs 25 pour faire baisser le niveau de carburant à un niveau P1.

Le réservoir présente alors un volume d'expansion correspondant au minimum au volume des sacs avant le début du remplissage.

Deux situations peuvent alors se présenter. En effet, la surface libre de carburant peut alors soit atteindre un seuil Q fixé par le constructeur, soit rester en dessous de ce seuil Q. Ce seuil est défini par le constructeur pour garantir la présence d'un volume d'expansion lorsque les sacs sont gonflés.

En référence à la figure 9, lorsque la surface libre de carburant atteint ledit seuil Q à l'issue du remplissage, les sacs gonflables demeurent dégonflés.

Par contre et en référence à la figure 10, la consommation de carburant par les moteurs d'un aéronef par exemple induit une baisse du niveau de carburant dans le réservoir selon la flèche F1. Par suite et en référence à la figure 11, lorsque le niveau de carburant passe en dessous du seuil Q, on déclenche le gonflement des sacs gonflables.

La figure 12 illustre le gonflage des sacs gonflables. Chaque sac gonflable définit alors une pente 30 inclinée vers une zone prédéterminée 100. Chaque pente présente ainsi une inclinaison α par rapport à la paroi inférieure de l'enveloppe du réservoir.

Dès lors, le niveau de carburant dans le réservoir augmente conformément aux flèches F2. Ce niveau peut repasser au dessus du seuil Q. Cependant, on comprend que les sacs gonflables demeurent alors gonflés.

La loi de jaugeage appliquée par un système de jaugeage est alors favorablement modifiée.

La figure 13 présente un réservoir muni de sacs gonflables totalement gonflés.

En référence à la figure 16, les sacs gonflables sont dégonflés après le vol et au sol, sur requête d'un équipage, ou encore à l'arrêt des moteurs par exemple.

La figure 17 présente alors l'état des sacs gonflables suite à ce dégonflage.

Les figures 14 et 15 illustrent le procédé en présence d'un remplissage partiel. Ces figures 14 et 15 peuvent aussi s'appliquer à une phase intermédiaire de vol.

Par suite, lorsque le niveau de carburant n'atteint pas le seuil Q à l'issue du remplissage, on gonfle les sacs gonflables à l'issue du remplissage. Autrement dit, il n'est alors pas nécessaire de dégonfler les sacs à l'issue du remplissage. Si les sacs ont été gonflés partiellement, ces sacs peuvent alors être gonflés complètement. Le dégonflage des sacs peut aussi être inhibé dans cette configuration par un moyen d'inhibition de type calculateur par exemple.

En fonction de la variante, on comprend que le seuil Q peut par exemple représenter une hauteur de carburant dans le réservoir, un volume de carburant ou encore une durée de vol.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Le premier mode de réalisation et le deuxième mode de réalisation sont par exemple combinables.

## Revendications

1. Dispositif de stockage (10) pour stocker du carburant pourvu d'au moins un réservoir (15), ce réservoir (15) ayant une enveloppe (20) s'étendant en élévation d'un fond (21) vers une paroi supérieure (22), ledit dispositif de stockage (10) étant pourvu d'au moins un sac gonflable (25) agencé dans ladite enveloppe, **caractérisé en ce que** ledit dispositif de stockage (10) comportant une unité de contrôle, un moyen de signalement et un moyen de gonflage/dégonflage (35) activable automatiquement par l' unité de contrôle et le moyen de signalement signalant la fin d'un remplissage, ladite unité de contrôle et ledit moyen de signalement contrôlant ledit moyen de gonflage/dégonflage (35) de manière qu'il gonfle chaque sac gonflable (25) au moins partiellement afin d'atteindre un volume gonflé préalablement à un remplissage du réservoir et dégonfle ledit sac gonflable suite au remplissage afin de garantir la présence d'un volume d'expansion dans ledit réservoir.

2. Dispositif selon la revendication 1,
**caractérisé en ce qu'**au moins un sac est fixé à ladite paroi supérieure.

3. Dispositif selon la revendication 1,
**caractérisé en ce qu'**au moins un sac est fixé audit fond pour ménager un volume d'expansion et pour ménager au moins une pente (30) d'inclinaison variable afin de diriger ledit carburant vers une zone prédéterminée (100) du réservoir (15) par gravité.

4. Dispositif selon la revendication 3,
**caractérisé en ce que** ce dispositif de stockage (10) comporte un moyen de mesure (40) du volume de carburant relié au moyen de gonflage/dégonflage (35) pour régler automatiquement une inclinaison de ladite pente en fonction dudit volume de carburant.

5. Dispositif selon l'une quelconque des revendications 3 à 4,
**caractérisé en ce que** ce dispositif de stockage (10) comprend un système de mesure (45) d'une durée de vol.

6. Dispositif selon l'une quelconque des revendications 3 à 5,
**caractérisé en ce que** ce dispositif de stockage (10) comprend un moyen de commande manuel (50) dudit moyen de gonflage/dégonflage (35).

7. Dispositif selon l'une quelconque des revendications 3 à 6,
**caractérisé en ce que** ce dispositif de stockage (10) comporte un capteur de pression (55).

8. Dispositif selon l'une quelconque des revendications 3 à 7,
**caractérisé en ce que** ledit dispositif de stockage (10) étant pourvu d'un système de jaugeage (42) mesurant la hauteur de carburant dans le réservoir (15), ledit système de jaugeage (42) comporte une loi de jaugeage pour chaque inclinaison autorisée de ladite pente, chaque loi de jaugeage fournissant le volume de carburant en fonction de ladite hauteur.

9. Dispositif selon l'une quelconque des revendications 3 à 8,
**caractérisé en ce que** ledit dispositif de stockage (10) est muni d'un moyen d'affichage (60) pour afficher une information relative à ladite pente.

10. Dispositif selon l'une quelconque des revendications 3 à 9,
**caractérisé en ce que** chaque sac est compartimenté afin de présenter un premier compartiment à gonfler/dégonfler pour obtenir un volume d'expansion, et un deuxième compartiment pour ménager une pente.

11. Aéronef (1),
**caractérisé en ce que** cet aéronef (1) comporte un dispositif de stockage (10) selon l'une quelconque des revendications 1 à 10.

12. Procédé de stockage de carburant dans un dispositif de stockage (10) pourvu d'au moins un réservoir (15), ce réservoir (15) ayant une enveloppe (20) s'étendant en élévation d'un fond (21) vers une paroi supérieure (22), ledit dispositif de stockage (10) étant pourvu d'au moins un sac gonflable (25) agencé dans ladite enveloppe, ledit dispositif de stockage (10) comportant un moyen de gonflage/dégonflage (35), dudit sac gonflable, au cours duquel, on gonfle au moins partiellement au moins un sac gonflable afin de ménager un volume d'expansion dans le réservoir avant un remplissage du réservoir, puis on dégonfle chaque sac gonflable à l'issue du remplissage.

13. Procédé selon la revendication 12,
**caractérisé en ce qu'**on gonfle chaque sac gonflable lorsque le volume de carburant est inférieur à un seuil prédéterminé suite au remplissage pour ménager une pente au fond d'un réservoir (15) permettant de diriger par gravité le carburant contenu vers une zone prédéterminée (100) du réservoir (15) en fonction du niveau de carburant.

14. Procédé selon l'une quelconque des revendications 12 à 13,
**caractérisé en ce que** pour ménager une pente permettant de diriger par gravité le carburant contenu vers une zone prédéterminée :
- le volume de carburant étant supérieur audit seuil suite à un remplissage, on gonfle ledit sac gonflable lorsque le volume de carburant devient inférieur au seuil prédéterminé,
- le volume de carburant n'atteignant pas ledit seuil suite à un remplissage, on gonfle ledit sac gonflable à l'issue dudit remplissage.

15. Procédé selon l'une quelconque des revendications 12 à 14,
**caractérisé en ce que**, au moins une loi de jaugeage étant déterminée pour fournir un volume de carburant en fonction d'une hauteur de carburant dans le réservoir, on modifie ladite loi de jaugeage lorsque ladite pente est modifiée.

16. Procédé selon l'une quelconque des revendications 12 à 15,
**caractérisé en ce que**, ledit dispositif de stockage (10) étant mis en oeuvre sur un aéronef (1) pourvu d'au moins un moteur, on dégonfle chaque sac gonflable à l'arrêt dudit moteur.

17. Procédé selon la revendication 12
**caractérisé en ce qu'**on dégonfle chaque sac gonflable à l'issue d'un remplissage si le niveau de carburant dépasse un seuil (Q) défini par le constructeur.

18. Procédé selon l'une quelconque des revendications 12 à 17,
**caractérisé en ce qu'**on dégonfle chaque sac gonflable à l'issue du remplissage au sol.

19. Procédé selon l'une quelconque des revendications 12 à 17,
**caractérisé en ce qu'**on dégonfle chaque sac gonflable immédiatement à l'issue du remplissage.

## Patentansprüche

1. Speichervorrichtung (10) zum Speichern von Kraftstoff mit mindestens einem Tank (15), wobei der Tank (15) ein Gehäuse (20) auf weist, das sich in der Höhe von einem Boden (21) bis zu einer oberen Wandung (22) erstreckt, wobei die Speichervorrichtung (10) mit mindestens einem aufblasbaren Sack (25) versehen ist, der in dem Gehäuse angeordnet ist,
**dadurch gekennzeichnet, dass**
die Speichervorrichtung (10) eine Steuereinheit, ein Anzeigemittel und ein Mittel zum Aufblasen/Entleeren (35), das automatisch durch die Steuereinheit aktivierbar ist, aufweist, und das Anzeigemittel das Ende eines Auffüllvorgangs anzeigt, wobei die Steuereinheit und das Anzeigemittel das Mittel zum Aufblasen/Entleeren (35) so steuern, dass dieses jeden aufblasbaren Sack (25) zumindest teilweise aufbläst, um vor dem Füllen des Tanks ein aufgeblasenes Volumen zu erreichen, und den aufblasbaren Sack nach dem Füllvorgang entleert, um die Präsenz eines Expansionsvolumens in dem Tank zu gewährleisten.

2. Vorrichtung nach Anspruch 1,
**dadurch gekennzeichnet, dass** mindestens ein Sack an der oberen Wandung befestigt ist.

3. Vorrichtung nach Anspruch 1,
**dadurch gekennzeichnet, dass** mindestens ein Sack an dem Boden befestigt ist, um ein Expansionsvolumen zu bilden und um mindestens eine Schräge (30) mit veränderbarer Neigung zu bilden, um durch die Schwerkraft den Kraftstoff in einen vorbestimmten Bereich (100) des Tanks (15) zu leiten.

4. Vorrichtung nach Anspruch 3,
**dadurch gekennzeichnet, dass** die Speichervorrichtung (10) ein Mittel (40) zur Messung des Kraftstoffvolumens aufweist, das mit dem Mittel zum Aufblasen/Entleeren (35) verbunden ist, um automatisch eine Neigung der Schräge in Abhängigkeit von dem Kraftstoffvolumen zu regeln.

5. Vorrichtung nach einem der Ansprüche 3 bis 4,
**dadurch gekennzeichnet, dass** die Speichervorrichtung (10) ein System (45) zur Messung einer Flugdauer aufweist.

6. Vorrichtung nach einem der Ansprüche3 bis 5,
**dadurch gekennzeichnet, dass** die Speichervorrichtung (10) ein manuelles Steuermittel (50) des Mittels zum Aufblasen/Entleeren (35) aufweist.

7. Vorrichtung nach einem der Ansprüche 3 bis 6,
**dadurch gekennzeichnet, dass** die Speichervorrichtung (10) einen Drucksensor (55) aufweist.

8. Vorrichtung nach einem der Ansprüche 3 bis 7,
**dadurch gekennzeichnet, dass** die Speichervorrichtung (10) mit einem Füllstandsmesssystem (42) versehen ist, das den Füllstand des Kraftstoffs in dem Tank (15) misst, wobei das Füllstandsmesssystem (42) für jede zugelassene Neigung der Schräge eine Füllstandsmessregel aufweist, wobei jede Füllstandsmessregel das Volumen des Kraftstoffs in Abhängigkeit von dem Füllstand liefert.

9. Vorrichtung nach einem der Ansprüche 3 bis 8,
**dadurch gekennzeichnet, dass** die Speichervorrichtung (10) mit einem Anzeigemittel (60) versehen ist zum Anzeigen einer Information bezüglich der Schräge.

10. Vorrichtung nach einem der Ansprüche 3 bis 9,
**dadurch gekennzeichnet, dass** jeder Sack unterteilt ist, um eine erste aufzublasende/zu entleerende Kammer zu bilden, um ein Expansionsvolumen zu erhalten, und eine zweite Kammer, um eine Schräge auszubilden.

11. Flugzeug (1),
**dadurch gekennzeichnet, dass** das Flugzeug (1) eine Speichervorrichtung (10) nach einem der Ansprüche 1 bis 10 aufweist.

12. Verfahren zum Speichern von Kraftstoff in einer Speichervorrichtung (10), die mit mindestens einem Tank (15) versehen ist, wobei der Tank (15) ein Gehäuse (20) aufweist, das sich in der Höhe von einem Boden (21) bis zu einer oberen Wandung (22) erstreckt, wobei die Speichervorrichtung (10) mit mindestens einem aufblasbaren Sack (25) versehen ist, der in dem Gehäuse angeordnet ist, wobei die Speichervorrichtung (10) ein Mittel zum Aufblasen/Entleeren (35) des aufblasbaren Sacks aufweist, wobei mindestens ein aufblasbarer Sack zumindest teilweise aufgeblasen wird, um ein Expansionsvolumen in dem Tank vor einem Auffüllvorgang des Tanks zu bilden, und jeder aufblasbare Sack am Ende des Auffüllvorgangs entleert wird.

13. Verfahren nach Anspruch 12,
**dadurch gekennzeichnet, dass** jeder aufblasbare Sack aufgeblasen wird, wenn das Kraftstoffvolumen nach dem Auffüllvorgang kleiner ist als ein vorgegebener Schwellenwert, um am Boden des Tanks (15) eine Schräge auszubilden, die es erlaubt, durch die Schwerkraft den enthaltenen Kraftstoff in einen vorbestimmten Bereich (100) des Tanks (15) in Abhängigkeit von dem Kraftstoffpegel zu lenken.

14. Verfahren nach einem der Ansprüche 12 bis 13,
**dadurch gekennzeichnet, dass**, um eine Schräge auszubilden, die es erlaubt, durch die Schwerkraft den enthaltenen Kraftstoff in einen vorbestimmten Bereich zu lenken:
- wenn das Kraftstoffvolumen nach dem Auffüllvorgang größer ist als der Schwellenwert, der aufblasbare Sack aufgeblasen wird, wenn das Kraftstoffvolumen kleiner wird als der vorbestimmte Schwellenwert,
- wenn das Kraftstoffvolumen nach einem Auffüllvorgang nicht den Schwellenwert erreicht, der aufblasbare Sack am Ende des Auf füllvorgangs aufgeblasen wird.

15. Verfahren nach einem der Ansprüche 12 bis 14,
**dadurch gekennzeichnet, dass** mindestens eine Füllstandsmessregel bestimmt wird, um ein Kraftstoffvolumen in Abhängigkeit von einem Kraftstoffpegel in dem Tank zu liefern, wobei die Füllstandmessregel geändert wird, wenn die Schräge verändert wird.

16. Verfahren nach einem der Ansprüche 12 bis 15,
**dadurch gekennzeichnet, dass** die Speichervorrichtung (10) in einem Flugzeug (1) eingesetzt wird, das mit mindestens einem Motor versehen ist, wobei beim Anhalten des Motors jeder aufblasbare Sack entleert wird.

17. Verfahren nach Anspruch 12,
**dadurch gekennzeichnet, dass** am Ende eines Auffüllvorgangs jeder aufblasbare Sack entleert wird, wenn der Kraftstoffpegel einen von dem Konstrukteur definierten Schwellenwert (Q) überschreitet.

18. Verfahren nach einem der Ansprüche 12 bis 17,
**dadurch gekennzeichnet, dass** jeder aufblasbare Sack am Ende eines Auffüllvorgangs am Boden entleert wird.

19. Verfahren nach einem der Ansprüche 12 bis 17,
**dadurch gekennzeichnet, dass** jeder aufblasbare Sack sofort bei Beendigung des Auffüllvorgangs entleert wird.

## Claims

1. Storage device (10) for storing fuel provided with at least one tank (15), the tank (15) having a casing (20) extending in elevation from a bottom (21) to a top wall (22),
said storage device (10) being provided with at least one inflatable bag (25) arranged inside said casing, **characterised in that** said storage device (10) comprising a control unit, a signalling means and an inflation/deflation means (35) activatable automatically by the control unit and the signalling means signalling the end of a filling, said control unit and said signalling means controlling said inflation/deflation means (35) so that it inflates each inflatable bag (25) at least partly in order to reach an inflated volume prior to a filling of the tank and deflates said inflatable bag after the filling in order to guarantee the presence of an expansion volume in said tank.

2. Device according to claim 1,
**characterised in that** at least one bag is fastened to said top wall.

3. Device according to claim 1,
**characterised in that** at least one bag is fastened to said bottom in order to provide an expansion volume and to provide at least one slope (30) of variable inclination in order to direct said fuel towards a predetermined zone (100) of the tank (15) by gravity.

4. Device according to claim 3,
**characterised in that** the storage device (10) comprises a measurement means (40) for measuring the volume of fuel connected to the inflation/deflation means (35) in order to
adjust automatically an inclination of said slope as a function of said volume of fuel.

5. Device according to any one of claims 3 to 4,
**characterised in that** the storage device (10) comprises a measurement system (45) for measuring a flight duration.

6. Device according to any one of claims 3 to 5,
**characterised in that** the storage device (10) comprises a means for manual control (50) of said inflation/deflation means (35).

7. Device according to any one of claims 3 to 6,
**characterised in that** the storage device (10) comprises a pressure sensor (55).

8. Device according to any one of claims 3 to 7,
**characterised in that** said storage device (10) being provided with a gauging system (42) measuring the height of fuel in the tank (15), said gauging system (42) comprises a gauging relationship for each authorised inclination of said slope, each gauging relationship providing the volume of fuel as a function of said height.

9. Device according to any one of claims 3 to 8,
**characterised in that** said storage device (10) is provided with a display means (60) for displaying information relating to said slope.

10. Device according to any one of claims 3 to 9,
**characterised in that** each bag is compartmentalised so as to present a first compartment to be inflated/deflated in order to obtain an expansion volume, and a second compartment for providing a slope.

11. Aircraft (1),
**characterised in that** the aircraft (1) comprises a storage device (10) according to any one of claims 1 to 10.

12. Method for storing fuel in a storage device (10) provided with at least one tank (15), the tank (15) having a casing (20) extending in elevation from a bottom (21) to a top wall (22), said storage device (10) being provided with at least one inflatable bag (25) arranged inside said casing, said storage device (10) comprising an inflation/deflation means (35) for inflation/deflation of said inflatable bag, during which at least one inflatable bag is inflated at least partly in order to provide an expansion volume in the tank before a filling of the tank, and then each inflatable bag is deflated at the conclusion of the filling.

13. Method according to claim 12,
**characterised in that** each inflatable bag is inflated when the volume of fuel is less than a predetermined threshold after the filling in order to provide a slope at the bottom of a tank (15) enabling the fuel contained to be directed by gravity towards a predetermined zone (100) of the tank (15) as a function of the fuel level.

14. Method according to any one of claims 12 to 13,
**characterised in that** in order to provide a slope enabling the fuel contained to be directed by gravity towards a predetermined zone:
- the volume of fuel being greater than said threshold after a filling, said inflatable bag is inflated when the volume of fuel falls below the predetermined threshold,
- the volume of fuel not reaching said threshold after a filling, said inflatable bag is inflated at the conclusion of said filling.

15. Method according to any one of claims 12 to 14,
**characterised in that**, at least one gauging relationship being determined to provide a volume of fuel as a function of a height of fuel in the tank, said gauging relationship is modified when said slope is modified.

16. Method according to any one of claims 12 to 15,
**characterised in that**, said storage device (10) being used on an aircraft (1) provided with at least one engine, each inflatable bag is deflated when said engine is stopped.

17. Method according to claim 12,
**characterised in that** each inflatable bag is deflated at the conclusion of a filling if the level of fuel exceeds a threshold (Q) defined by the manufacturer.

18. Method according to any one of claims 12 to 17,
**characterised in that** each inflatable bag is deflated at the conclusion of the filling on the ground.

19. Method according to any one of claims 12 to 17,
**characterised in that** each inflatable bag is deflated immediately at the conclusion of the filling.
